(19) **Europäisches Patentamt**

**European Patent Office**

**Office européen des brevets**

(11) **EP 1 176 355 A2**

(12) **EUROPEAN PATENT APPLICATION**

(43) Date of publication:
**30.01.2002 Bulletin 2002/05**

(51) Int Cl.7: **F16L 55/027**, F16L 55/033

(21) Application number: **01305870.6**

(22) Date of filing: **06.07.2001**

| (84) Designated Contracting States:<br>**AT BE CH CY DE DK ES FI FR GB GR IE IT LI LU MC NL PT SE TR**<br>Designated Extension States:<br>**AL LT LV MK RO SI** | (71) Applicant: **TRELLEBORG AB**<br>**231 22 Trelleborg (SE)** |
| --- | --- |
| (30) Priority: **28.07.2000 GB 0018620**<br>**26.09.2000 GB 0023556** | (72) Inventor: **Coulon, Jean-Michel**<br>**44000 Nantes (FR)** |
| | (74) Representative: **Knott, Stephen Gilbert et al**<br>**MATHISEN, MACARA & CO. The Coach House**<br>**6-8 Swakeleys Road**<br>**Ickenham Uxbridge UB10 8BZ (GB)** |

(54) **Noise attenuation arrangements for pressurised-gas conduits**

(57)    A noise attenuation arrangement, particularly suitable for attenuating noise radiated by a conduit (10) carrying pressurised air from a turbo-compressor in an internal combustion engine, is in the form of cavities (14) (Figure 2) arranged around the outside of the surface of the conduit (10), and connected to the interior of the conduit by slots (16). In this case, sound attenuation is produced in part by the Helmholtz resonator effect and in part by reflection of the acoustic waves caused by the change in section between the conduit (10) and the attenuator (12). The Helmholtz resonator effect of the different cavities produces attenuation at different frequencies according to the volume of each cavity and the sizes of the slots (16). The attenuator arrangement is advantageously produced by a plastics injection process in two parts, one comprising a portion of the conduit (10) and a body portion forming the cavities (14) with longitudinally positioned adjacent ends, which are closed off by the second part which is in the form of a cover plate. Other noise attenuation arrangements using the quarter-wave resonator effect are also disclosed, comprising activities arranged round the outside of the conduit.

Fig. 2

EP 1 176 355 A2

**Description**

The invention relates to noise attenuation for pressurised-gas conduits. Particular arrangements embodying the invention and to be described in more detail below are in the form of silencers for minimising the emanation of noise from pipes or conduits conducting pressurised air to an internal combustion engine from a turbo-compressor.

According to the invention, there is provided a noise attenuating arrangement for a conduit carrying a pressurised fluid, comprising means defining at least one cavity mounted on the outside of a longitudinal surface of the conduit.

Noise attenuation arrangements embodying the invention, and in the form of silencers for attenuating noise emanating from pipes or conduits used to convey pressurised air to an internal combustion engine from a turbo-compressor, will now be described, by way of example only, with reference to the accompanying diagrammatic drawings in which:

Figure 1 is a longitudinal section through one of the arrangements, taken on the line I-I of Figure 2;

Figure 2 is a section on the line II-II of Figure 1;

Figure 3 shows graphs for explaining the performance of the noise attenuation arrangement of Figures 1 and 2;

Figure 4 is a longitudinal section through a modified form of the arrangements of Figures 1 and 2, taken on the line IV-IV of Figure 5;

Figure 5 is a section on the line V-V of Figure 4;

Figure 6 is a plan view of another of the arrangements;

Figure 7 is a side view of the arrangement of Figure 6;

Figure 8 shows graphs for explaining the performance of the arrangements of Figures 6 and 7;

Figures 9 and 10 correspond to Figures 6 and 7 but show modifications; and

Figures 11 and 12 correspond generally to Figures 4 and 10 but show modifications.

The noise attenuation arrangements to be described in more detail below are particularly suitable for attenuating noise emissions from the output conduit of a turbo-compressor in an internal combustion engine. Such a conduit carries compressed air from the turbo-compressor to the engine air intake or to an intercooler.

As speeds of such turbo-compressors are increased, the pressure of the air in the conduit increases. At higher turbo boost pressures, significant increases in temperature (e.g. up to 175°C) in the conduit can occur, reducing its mechanical properties (reduction of Young's modulus) and increasing its acoustic transparency. Compromises in the design of turbo-compressors, in order to reduce costs, also takes place. All these factors tend to increase the amount of noise which can be radiated from the conduit, but such noise increases are not acceptable.

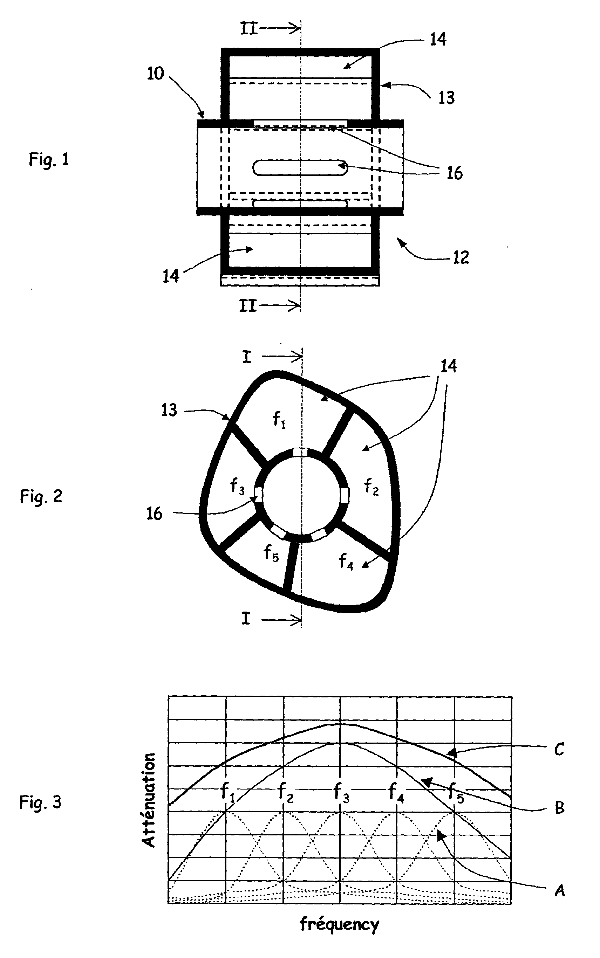

Figure 1 shows part of the conduit 10 extending from the turbo-compressor (not shown) to the air intake of the engine, or to the inter-cooler. The noise attenuation arrangement is shown at 12 and comprises a body 13 defining a plurality of resonator cavities 14 (see Figure 2) which are arranged around the conduit 10 and are connected to it through the intermediary of respective slots 16.

Attenuation of the sound radiated by the conduit is produced by two effects: (a) the Helmholtz resonator effect of the cavities 14, and (b) the reflection of the acoustic waves produced by the change in section between the conduit 10 and the attenuator 12.

The attenuation produced by each cavity 14 in accordance with the Helmholtz resonator effect occurs at a particular frequency $f_1, f_2, f_3, f_4$ and $f_5$. The attenuation frequency of each cavity is determined by the volume of the cavity, and the section and thickness of each slot 16.

The attenuation by reflection is dependent on the ratio of the cross-section of the attenuator 12 to the cross-section of the conduit 10, and the length of the conduit.

In Figure 3, the dotted curves A show the component of the attenuation produced by the Helmholtz effect at the respective frequencies $f_1, f_2, f_3, f_4$ and $f_5$. Curve B shows the component of attenuation caused by the reflective effect. Curve C shows the total attenuation.

The frequency band within which attenuation is to take place, the amount of attenuation necessary, and the available space around the conduit within the engine compartment determine the form of the attenuator 12 and the number and size of the cavities 14.

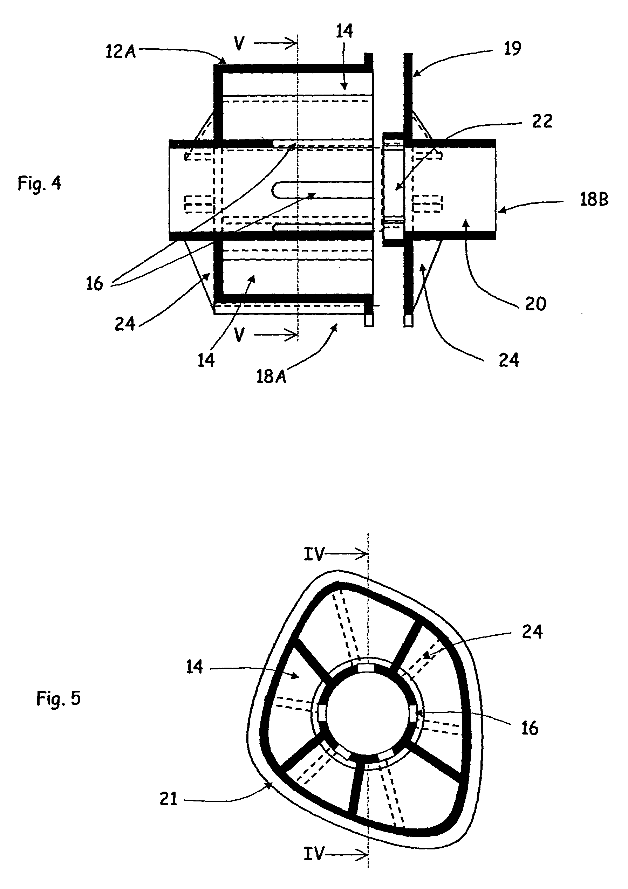

Figure 4 illustrates how an attenuator of the form shown in Figures 1 and 2 can be produced by plastics injection process. As shown, the attenuator 12 is extruded in two parts 18A and 18B. Part 18A includes the conduit 10 connected to an attenuator part 12A through the slots 16. The attenuator part 12A defines the cavities 14 to have open ends facing to the right (as viewed in Figure 4). The second part 18B is in the form of an end cover 19 which includes a continuation 20 of the conduit 10. The part 18B is placed over the open ends of the cavities in the part 18A and the two are joined together by a welding operation around the periphery as shown at 21 in Figure 5. A rim 22 helps to locate the two parts 18A and 18B together. For strengthening purposes, the injection process can produce ribs 24.

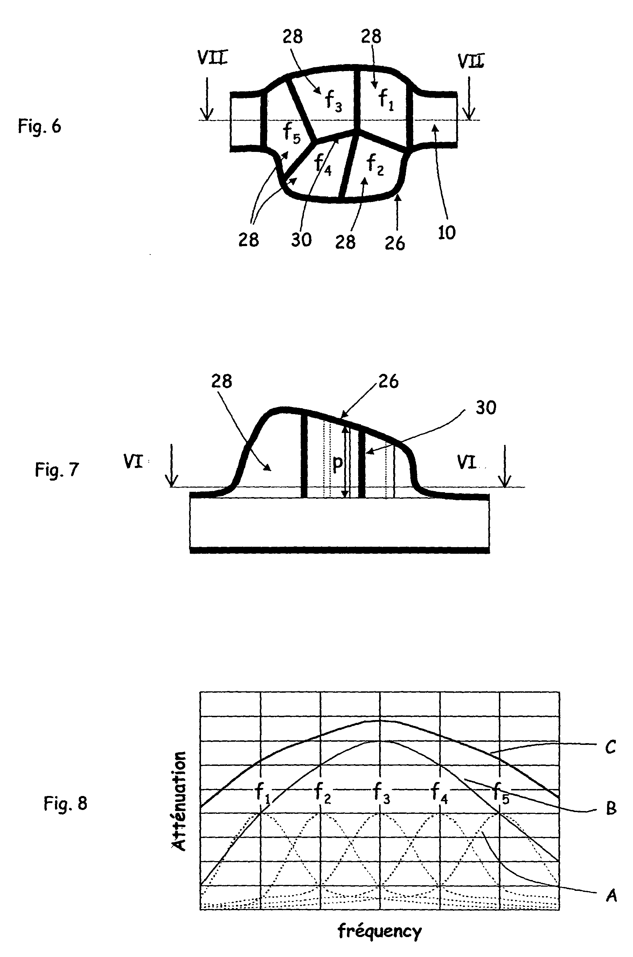

Figures 6 and 7 show an attenuator 26 which is arranged around the conduit 10 and operates on the quarter-wave resonator principle. The attenuator arrangement is provided with cavities 28 separated by walls 30. The attenuation frequency $f_1, f_2, f_3, f_4$ and $f_5$ of each cavity is determined by its depth $p$ (see Figure 7) according to the formula

$$f = c/4p$$

where c is the speed of sound.

The efficiency of the attenuator is dependent on the ratio of the cross-section of the cavities to that of the conduit 10. Similarly, the reflection coefficient is a function of the ratio of the cross-section of the attenuator arrangement to the cross-section of the conduit.

The curves A,B and C in Figure 8 correspond with those in Figure 3.

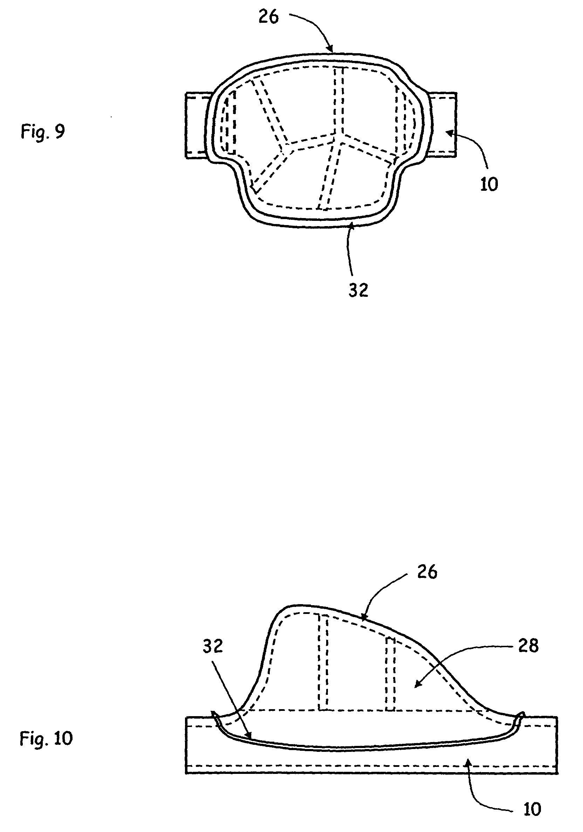

Again, the attenuator 26 of Figures 6 and 7 can be produced using a plastics injection method as shown in Figures 9 and 10. The method produces two separate parts. The first part comprises the conduit 10 and the second part the attenuator 26. The two parts are then welded together along a joining line 32 extending longitudinally with reference to the conduit 10 (see Figure 10), which forms weld beadings 32A extending partly round the conduit.

The noise attenuation arrangements extend along part, only, of the length of the conduit.

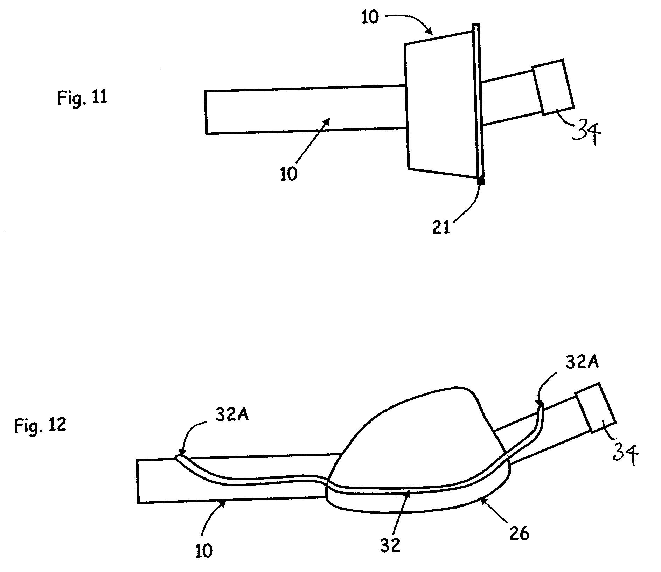

Figures 11 and 12 correspond respectively with Figures 4 and 10 and show how the attenuator can be integrated with the conduit, thus saving separate connections and enabling a "quick connector" 34 to be integrated with the conduit to enable easy connection to the output of the turbo.

## Claims

1. A noise attenuating arrangement for a conduit (10) carrying a pressurised fluid, comprising means (13,26) defining at least one cavity (14;28) mounted on the outside of a longitudinal surface of the conduit.

2. An arrangement according to claim 1, in which there are a plurality of the cavities (14;28).

3. An arrangement according to claim 2, in which the cavities (14;28) at least in part are positioned side-by-side along the length of the longitudinal surface of the conduit (10) and provide noise attenuation by the quarter-wave resonator effect.

4. An arrangement according to claim 2, in which the cavities (14;28) are arranged circumferentially around the outside of the longitudinal surface of the conduit (10).

5. An arrangement according to claim 4, in which each cavity (14;28) is connected to the inside of the conduit (10) by a respective aperture (16) in the longitudinal surface of the conduit (10), whereby noise attenuation takes place partly by the Helmholtz resonator effect and partly by reflection.

6. An arrangement according to claim 5, in which each aperture is a slot (16).

7. An arrangement according to any one of claims 2 to 6, made in two parts by a moulding process from plastics material, one part (18A) comprising a portion of the conduit (10) integrally surrounded by a body portion (26) defining the cavities (28), the cavities (28) having adjacent open ends at one longitudinal end of the conduit portion (10), the open ends of the cavities (28) being closed off by the second part (18B) which is in the form of a cover (19) circumferentially extending around a second conduit portion, the cover (19) being sealingly secured over the open ends of the cavities (28) and sealingly securing the two conduit portions together.

8. An arrangement according to claim 7, including respective conduit lengths integrally extending in opposite directions from each said part, one of the conduit lengths terminating in a connector (34).

9. An arrangement according to any one of claims 2 to 6, made in two parts by a moulding operation from plastics material, the first part (18A) comprising a portion of the conduit (10) with a section of the wall of the conduit omitted along less than the whole length of the portion and the second part comprising the omitted section of the said wall on which is integrally formed means (26) defining the said cavities (28), the two said parts (10,26) being placed together so that the section of the wall comprised in the second part completes the wall of the portion of the conduit (10) comprised in the first part and is joined to that portion of the conduit along a joining line extending lengthwise of the conduit (10).

10. An arrangement according to claim 9, including respective conduit lengths integrally extending in opposite directions from the said portion of the conduit, one of the conduit lengths terminating in a connector (34).

11. An arrangement according to any preceding claim, in which the conduit (10) is an output conduit from a turbo-compressor in an internal combustion engine.

**12.** An arrangement according to claim 8 or 10, in which the conduit (10) is an output conduit from a turbo-compressor in an internal combustion engine, the said connector (34) being adapted to connect to an output port of the turbo-compressor.

Fig. 1

Fig. 2

Fig. 3

Fig. 4

Fig. 5

Fig. 6

Fig. 7

Fig. 8

fréquency

Fig. 9

26

10

32

Fig. 10

26

32

28

10

Fig. 11

10

10

21

34

Fig. 12

32A

32A

10

32

26

34